# EUROPÄISCHE PATENTSCHRIFT

(11) **EP 1 160 113 B1**
(45) Veröffentlichungstag und Bekanntmachung des Hinweises auf die Patenterteilung: **27.02.2008**
(21) Anmeldenummer: 01890155.3
(22) Anmeldetag: 23.05.2001
(51) Int. Cl.: B60J 7/12

(54) **Betätigungsanordnung für schwenkbare Teile von Verdecken**
Driving assembly for swingable parts of soft tops
Système d'actionnement pour pièces pivotantes sur capotes escamotables

(30) Priorität: 31.05.2000 AT 9592000
(43) Veröffentlichungstag der Anmeldung: 05.12.2001
(73) Patentinhaber: Hoerbiger Automatisierungstechnik Holding GmbH, 86972 Altenstadt (DE)
(72) Erfinder: Kladiwa, Wolfgang, 82386 Huglfing (DE); Hollerbach, Anton, 86956 Schongau (DE); Stolle, Klaus, 86972 Schwabniederhofen (DE)
(74) Vertreter: Laminger, Norbert

(56) Entgegenhaltungen:
- EP-A- 0 733 505
- DE-A- 4 123 774
- DE-A- 19 808 588
- DE-A- 19 827 796
- DE-C- 4 113 616
- US-A- 5 467 596
- US-A- 5 671 966
- US-A- 5 678 881
- US-A- 5 772 274
- PATENT ABSTRACTS OF JAPAN vol. 011, no. 213 (M-605), 10. Juli 1987 (1987-07-10) & JP 62 031515 A (KANTO AUTO WORKS LTD), 10. Februar 1987 (1987-02-10)

## Beschreibung

Die Erfindung betrifft eine Betätigungsanordnung für schwenkbare Teile von Verdecken, insbesonders Verdeckspriegel oder Verdeckdeckel, welche Teile am Fahrzeug an zumindest einem Hauptlager schwenkbar gelagert sind, mit zumindest einem an diesen schwenkbaren Teilen angreifenden Drehantrieb mit Fluidmotor und einer angetriebenen, baulich in das Hauptlager integrierten Drehwelle, welches Hauptlager eine Aufnahme- und/oder Lagerstruktur für die Drehwelle des Drehantriebs aufweist.

Für die Betätigung von Verdeckelementen, beispielsweise den Verdeckspriegeln oder auch Abdeckklappen des Verdeckaufnahmeraumes, werden herkömmlicherweise Fluidantriebe in Form von Arbeitszylindern eingesetzt, die mit einem Ende an der Karosserie des Fahrzeuges angelenkt und mit dem anderen Ende, meist dem äußeren Ende der Kolbenstange, am zu bewegenden Teil angreifen. Die schwenkbaren Teile selbst sind über ein oder mehrere Lager am Fahrzeug abgestützt. Die Verdecke für Cabrios besitzen dabei typischerweise ein Hauptlager, das u.a. die verschiedenen Spriegel verschwenkbar aufnimmt und den Hauptdrehpunkt für die schwenkbaren Teile darstellt. Speziell für Verdecke werden diese Hauptlager herkömmlicherweise aus Blechbiegeteilen oder Aludruckguss hergestellt. Diese Lösung ist auch für die Deckel von Verdecken und für die gegeneinander verschwenkbaren Abschnitte der Verdecke selbst, insbesonders bei Hardtops oder ähnlichen Konstruktionen, allgemein üblich.

Diese Lösung hat aber einige Nachteile, so etwa, dass viele Befestigungs- und Funktionsbohrungen vorgesehen sein müssen. Auch sind viele Nebendrehpunkte vorhanden, welche meist verstärkt werden müssen und auch die Kinematik des schwenkbaren Teils wesentlich beeinflussen. So werden beispielsweise oftmals am Anfang und am Ende der Bewegung die größten Kräfte benötigt, welcher Anforderung aber aufgrund der möglichen Anordnung der Arbeitszylinder im Bereich der Schwenkachsen nicht Genüge getan werden kann. Aufgrund der Auslenkung ist auch das erzeugte Moment während der Drehbewegung nicht konstant. All dies führt auch zu einem erhöhten Gewicht des Gesamtsystems und zu höherem Aufwand und Kosten.

Ein anderer Vorschlag, offenbart in der DE 198 47 983 C1, betrifft ein Fahrzeug mit einem mehrteiligen, versenkbaren Verdeck, das aus zumindest zwei Verdeckelementen besteht. Diese sind schwenkbar miteinander und über wenigstens ein Element mit dem Fahrzeug verbunden, wobei zur Verbindung der Verdeckelemente miteinander und mit der Fahrzeugkarosserie Drehgelenke vorgesehen sind, von welchen wenigstens ein Drehgelenk pro Verbindung antreibbar ist. Die Lösung der DE 198 47 983 C1 sieht aber eine Konstruktion vor, bei welcher das den Antrieb bzw. zumindest die angetriebene Welle des Drehgelenkes beherbergende Gehäuse am Verdeckelement befestigt ist, insbesonders auch an jenem Verdeckelement, welches mit der Fahrzeugkarosserie verbunden ist, wobei an der Fahrzeugkarosserie lediglich ein mit der angetriebenen Welle drehfest verbundener Beschlag befestigt ist. Diese Art von schwenkbarer Verbindung hat natürlich den Nachteil, dass der größere und auch schwerere Teil am verschwenkten Verdeckelement befestigt ist und dass das Verdeckelement besonderen Auflagen bezüglich mechanischer Stabilität und Steifheit genügen muß, um einen exakten Bewegungsablauf zu gewährleisten, welche Auflagen die gestalterischen Freiheiten sehr einschränken.

In der US 5 467 596 A ist eine Konstruktion der eingangs angegebenen Art geoffenbart, bei welcher ein Drehflügel-Aktuator gleichzeitig Lager als auch Antrieb für den Hauptspriegel des Verdecks eines Cabriolets ist. Der Spriegel ist auf der vom Drehflügel betätigten Achse montiert, welche Achse auch über einen Drehsensor überwacht wird. Dabei ist aber keine Trennung von Lager und Drehantrieb vorgesehen, d.h. der Aktuator selbst ist das an der Karosserie des Fahrzeuges angebrachte Hauptlager des Verdecks, so daß keine unabhängige Reparatur und Wartung möglich ist. Auch die Fertigung und Auslegung beider Komponenten kann nicht optimal auf die jeweilige Funktion abgestellt werden, sondern wird immer eine Kompromisslösung sein.

Es war daher die Aufgabe der vorliegenden Erfindung, eine Betätigungsanordnung der eingangs beschriebenen Art derart auszubilden, dass die genannten Nachteile vermieden werden und eine einfache Konstruktion geschaffen ist, die bei kleinem Bauvolumen und Gewicht ein konstantes Moment erzeugt und allenfalls für im Prinzip beliebige Drehwinkel geeignet ist.

Zur Lösung dieser Aufgabe ist die Betätigungsanordnung dadurch gekennzeichnet, dass der Drehantrieb einen linearen Arbeitszylinder aufweist, dessen Kolbenstange bei ihrem linearen Arbeitshub über ein mechanisches Getriebe die Drehwelle antreibt. Funktionell und bezüglich der Erzielung der nötigen Dichtheit der Arbeitsräume des Fluidzylinders ist dies eine einfache und bewährte Lösung. Linearantriebe sind problemlos in Herstellung und Betrieb und auch für oftmaligen Betrieb über lange Zeiträume bestens geeignet. Bei entsprechend großem Querschnitt des Kolbens sind auch die erzielbaren Kräfte für alle Anwendungen ausreichend hoch.

Gemäß einer sehr einfach und betriebssicher gestalteten, bevorzugten Ausführungsform ist dabei die Kolbenstange zumindest an ihrem äußeren Ende in Form einer Zahnstange ausgebildet oder steht mit einer Zahnstange in zug- und druckfester Verbindung, und greift ein Ritzel in die Verzahnung der Zahnstange ein, welches Ritzel drehfest auf der Drehwelle befestigt ist.

Für eine Anordnung der obigen Betätigungsanordnung in einem äußeren Rand- oder Eckbereich des zu bewegenden Bauteils ist vorteilhafterweise vorgesehen, dass das Ritzel an einem Ende der Drehwelle befestigt und das zweite Ende der Drehwelle mit dem schwenkbaren Teil drehfest verbunden ist. Damit ist eine Ankopplung des bewegbaren Teiles des Verdecksystems aus nur einer Richtung quer zur Längsachse der Betätigungsanordnung und damit deren Einbau in den Seitenbereichen des Fahrzeuges möglich.

Gemäß einem weiteren Merkmal der Erfindung ist die Zahnstange in einer Führungsbahn in Längsrichtung geführt, wobei die Führungsbahn vorzugsweise in Richtung auf das Ritzel hin verstellbar gelagert ist, vorzugsweise mittels Schrauben. Damit kann das Spiel in der Verzahnung genau eingestellt, wenn nötig minimiert oder gar gänzlich vermieden, werden.

Eine andere mechanische Umsetzung der Linearbewegung in eine geeignete Drehbewegung der Drehwelle ist dadurch möglich, dass der Arbeitszylinder und die Drehwelle über ein mechanisches Schneckengetriebe verbunden sind, wobei diese Anordnung relativ kleine Querschnitte der Anordnung quer zu ihrer Längsachse und die Umsetzung von Drehbewegungen mit hoher Umdrehungszahl in langsamere und über einen geringeren Winkelbereich erfolgende Drehbewegungen zuläßt.

Eine Orientierung der Drehwelle in einem größeren Winkelbereich in Bezug auf die Längsachse des Fluidzylinders und auch eine Versetzung zwischen diesen Bauteilen ist möglich, wenn der Arbeitszylinder und die Drehwelle über ein Kegelrad-Getriebe verbunden sind.

Der optimale Schutz der Betätigungsanordnung selbst und damit ein ungehinderter und störungsfreier Betrieb sowie der Schutz von Benutzern vor Verletzungen oder anderen Gegenständen vor Beschädigung durch die Betätigungsanordnung ist gegeben, wenn sich die Kolbenstange, der damit zusammenwirkende Abschnitt der Drehwelle und alle zwischengeschalteten Teile unter einer Abdeckung befinden.

Ein derartiger Schutz durch eine Abdeckung kann in einfacher Weise hergestellt werden, wenn die Abdeckung eine Verlängerung des Arbeitszylinders ist.

Gemäß einer anderen erfindungsgemäßen Ausführungsform kann die Abdeckung auch durch das Hauptlager oder Teile des Hauptlagers gebildet sein.

Gemäß einem weiteren Merkmal der Erfindung ist vorgesehen, dass die Drehwelle des Drehantriebs in der Schwenkachse des schwenkbaren Teiles liegt und somit gleichzeitig die Hauptachse des Hauptlagers ist, wobei die Drehwelle mit dem schwenkbaren Teil drehfest verbunden ist, allenfalls über einen zwischengeschalteten Hebel. Damit ist eine gänzlich gleichbleibende Kinematik bei großer Kompaktheit gewährleistet.

Vorteilhafterweise liegt gemäß einem weiteren Merkmal der Erfindung der Drehantrieb zumindest teilweise, vorzugsweise zur Gänze, im Inneren des Hauptlagers, wodurch der geringst mögliche Bauraum beansprucht wird.

Wenn weiters das Hauptlager aus einem Strangpressprofil hergestellt ist, lassen sich damit die einfache Herstellung und die einfache und wirtschaftliche Integration des Antriebs in das Hauptlager erreichen.

Besonders vorteilhaft kann die erfindungsgemäße Betätigungsanordnung eingesetzt werden, wenn die Drehwelle den schwenkbaren Teil zumindest zum Teil auch trägt, unmittelbar oder mittelbar über zumindest einen, mit dem schwenkbaren Teil fest verbundenen Hebel. Neben dem geringeren Platzbedarf des Fluidantriebs gegenüber den üblichen Lageranordnungen im Verdecksystem kann auch deren oftmals ungünstiger Kraftverlauf vermieden und ein besserer und gleichmäßigerer Bewegungsablauf für den schwenkbaren Teil erreicht werden.

Gemäß einem weiteren vorteilhaften Merkmal der Erfindung ist ein Drehsensor vorgesehen und mit vorzugsweise der Drehwelle oder aber der Drehachse des Drehantriebes gekoppelt, sodass in einfacher und genauer Weise die Bewegungen des von der Betätigungsanordnung betätigten Bauteils ermittelt und beispielsweise zur Steuerung des Druckmediums oder anderer, vom betätigten Bauteil und dessen Stellung abhängiger Bewegungsabläufe herangezogen werden können.

In der nachfolgenden Beschreibung soll die Erfindung anhand von bevorzugten Ausführungsbeispielen, die in den beigefügten Zeichnungen dargestellt sind, näher erläutert werden.

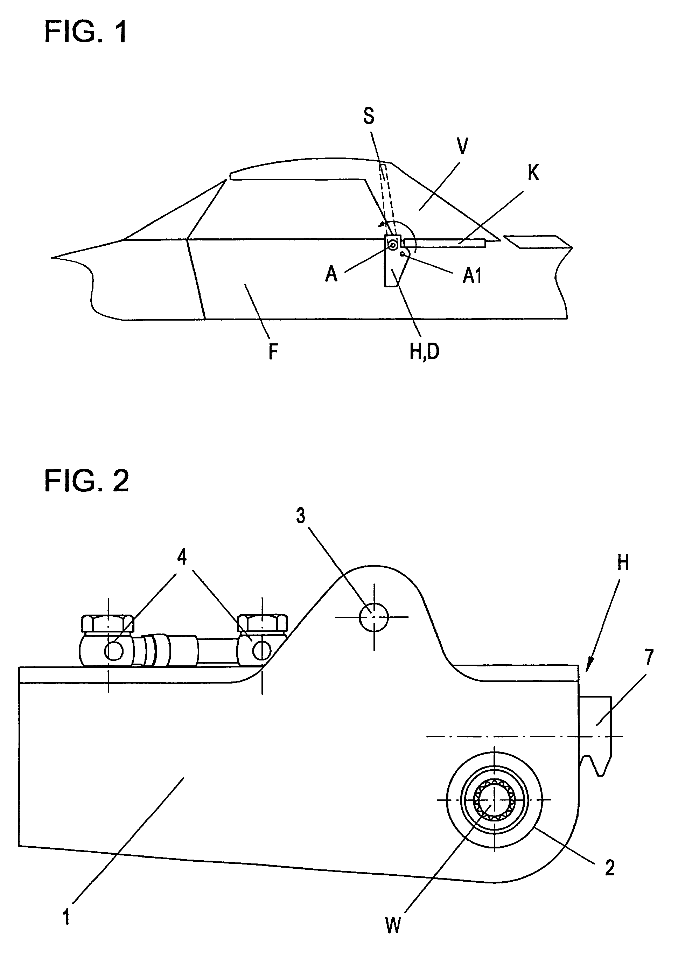

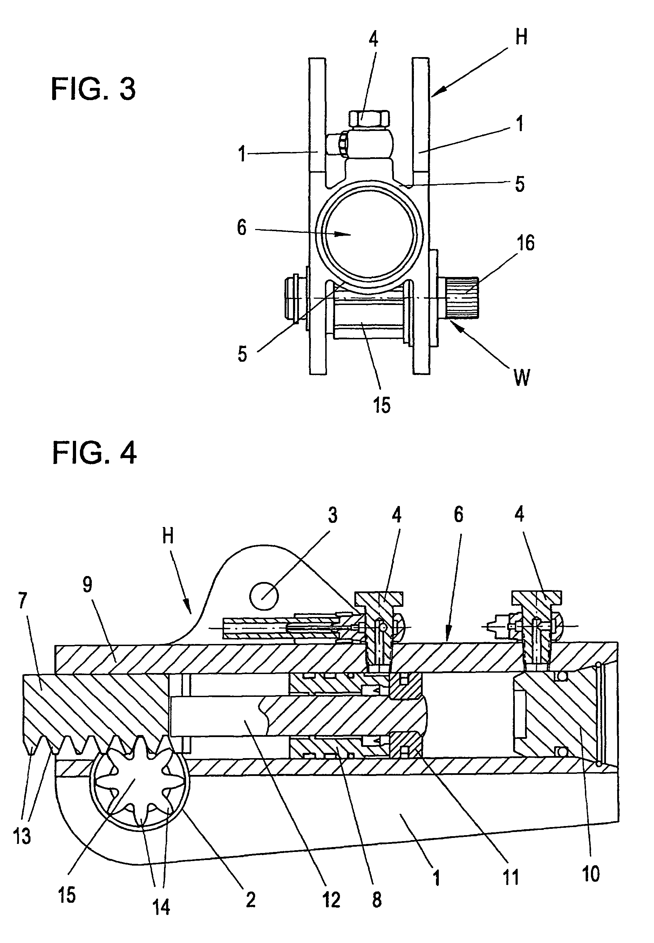

Dabei zeigt die Fig. 1 eine schematische Darstellung einer erfindungsgemäßen Betätigungsanordnung, Fig. 2 ist eine vergrößerte Seitenansicht des Hauptlagers mit integriertem Drehantrieb der Fig. 1, Fig. 3 zeigt eine Vorderansicht des Hauptlagers der Fig. 2, und Fig. 4 ist ein Längsschnitt durch das Hauptlager mit integriertem Drehantrieb der Fig. 2.

In Fig. 1 ist an der Karosserie des Fahrzeuges F das Hauptlager H des Verdecks V befestigt. Im Hauptlager H, in dem wie weiter unten erläutert wird zumindest ein Drehantrieb D für das Verdeck V und allenfalls auch weitere schwenkbare Teile des Fahrzeugs F integriert ist, ist beispielsweise der Spriegel S des Verdecks V drehbar um die Schwenkachse A gelagert. Auch die Schwenkachse A1 des Deckels für die Abdeckklappe K des Verdecks V kann vorteilhafterweise im Hauptlager H ausgebildet sein. Die Betätigung der Abdeckklappe K kann ebenfalls über einen im Hauptlager integrierten Drehantrieb oder einen separaten Antrieb erfolgen.

Vorteilhafterweise liegt die Drehwelle W des in das Hauptlager integrierten Drehantriebs D in der Schwenkachse A des jeweiligen, zu betätigenden Fahrzeugteils, vorzugsweise zumindest des Spriegels S des Verdecks V. Die Drehwelle W kann auch zumindest einen Teil des Gewichts des von ihr betätigten Fahrzeugteils tragen oder direkt dessen Drehachse A bzw. A1 bilden.

Der in das Hauptlager H integrierte Drehantrieb D ersetzt dabei vorteilhafterweise die herkömmliche Lagerung der genannten Bauteile und deren Antriebe, die oftmals eine ungünstige Lagerung haben, und nimmt dabei weniger Platz ein, da alle Lager und Antriebe vollständig durch das Hauptlager H ersetzt werden können. Wenngleich dies auch in Fig. 1 nicht dargestellt ist, kann die erfindungsgemäße Betätigungsanordnung auch an der Verbindung beispielsweise zweier gegeneinander verschwenkbarer Verdeckteile eingesetzt werden.

Ein Ausführungsbeispiel für ein erfindungsgemäßes Hauptlager H mit integriertem Drehantrieb D, insbesonders einem Fluidantrieb mit einem linearen Fluidmotor ist in den Fig. 2 bis 4 dargestellt und wird nachfolgend erläutert.

Das Hauptlager H besteht aus vorzugsweise einem Strangpressprofil mit zwei Seitenteilen 1, die vorzugsweise im wesentlichen eben und parallel zueinander angeordnet sind. In diesen Seitenteilen 1 sind jeweils Paare von fluchtenden Öffnungen 2, 3 vorgesehen, welche die Drehachsen der am Hauptlager H angelenkten schwenkbaren Fahrzeugteile aufnehmen oder der Anlenkung von weiteren Bauteilen dienen. So ist durch die Öffnungen 2 vorzugsweise die Drehwelle W des Drehantriebs D hindurchgeführt, welche wie weiter unten erläutert wird, drehfest mit dem schwenkbaren Teil des Verdecksystems verbunden werden kann. Die Öffnungen 3 definieren beispielsweise eine Nebendrehachse. Weiters sind in Fig. 1 noch die Anschlüsse 4 für das Arbeitsmedium des vorzugsweise als Fluidantrieb, insbesonders als Hydraulikmotor, ausgebildeten Drehantriebs D zu erkennen.

Wie in Fig. 3 deutlich zu sehen ist, sind die beiden Seitenteile 1 des Hauptlagers H durch quer zu diesen Seitenteilen 1 verlaufende Abschnitte 5 miteinander verbunden, wobei diese Abschnitte 5 allein oder zusammen mit den Seitenteilen 1 eine Aufnahme für den Drehantrieb D bilden, allenfalls auch selbst als Teil von dessen Gehäuse od. dgl. dienen. Im dargestellten Ausführungsbeispiel ist der Drehantrieb D durch einen linearen hydraulischen Arbeitszylinder 6 gebildet, der über eine Zahnstange 7 mit der Drehwelle W drehfest verbunden ist. Dabei ist vorteilhafterweise vorgesehen, dass das Zylinderrohr von vorzugsweise kreisförmigem Querschnitt durch die Seitenteile 1 und die quer dazu verlaufenden Abschnitte 5 des Hauptlagers H gebildet ist.

In einem mittleren Bereich des Hauptlagers H ist ein Deckel 8 des Fluidzylinders 6 (Arbeitszylinder) ausgebildet. Das Hauptlager H weist in Verlängerung des Zylinderrohrs des Fluidzylinders 6 vorteilhafterweise eine Verlängerung 9 auf, die ein an den Deckel 8 anschließendes, ebenfalls durch die Seitenteile 1 und quer dazu verlaufende Abschnitte 5 gebildetes Gehäuse darstellen, in welchem die Zahnstange 7 geführt ist. Auf der, der Verlängerung 9 gegenüberliegenden Seite des Deckels 8 ist ein Zylinderboden 10 vorgesehen, der allenfalls auch einstückig mit dem Hauptlager H ausgeführt sein könnte. Durch das über die Anschlüsse 4 zu- und abgeleitete Arbeitsmedium wird ein Kolben 11 innerhalb des Zylinderrohres axial verschoben und damit auch die mit dem Kolben 11 fest verbundene Kolbenstange 12, welche abgedichtet durch den Deckelbereich 8 hindurchgeführt ist und in das durch die Verlängerung 9 gebildete Gehäuse ragt. Diese Verlängerung 9 beinhaltet vorteilhafterweise eine Führungsbahn für die Zahnstange 7 oder bildet selbst eine Führungsbahn.

Die Zahnstange 7 ist mit der Kolbenstange 12 zug- und druckfest verbunden, beispielsweise über eine lösbare Verbindung in Form eines tellerförmigen Endes der Kolbenstange 12, das in einer Nut mit schmalem Schlitz in der Zahnstange 7 quer zur Längsrichtung verschiebbar gehalten ist. Auch Verspannungen zwischen diesen beiden Teilen werden derart vermieden.

Die Zähne 13 der Zahnstange 7 sind im Eingriff mit Zähnen 14 eines Ritzels 15, das drehfest auf der Drehwelle W befestigt ist, welche - wie bereits oben erläutert wurde - in den Öffnungen 2 der Seitenteile 1 des Hauptlagers, vorzugsweise zwei allenfalls laschenartigen Teilen davon, drehbar und quer zur Längsachse des Fluidzylinders 6 und der Zahnstange 7 orientiert gelagert ist. Die Drehwelle W weist an ihrem äußeren Ende vorzugsweise eine Verzahnung 16 auf, so dass ein Hebel oder auch der schwenkbare Verdeckteil S, K des Fahrzeuges selbst auf einfache Weise drehfest mit der Drehwelle W verbunden werden kann. Die drehfeste Verbindung könnte aber auch auf jede andere form- und/oder kraftschlüssige Weise hergestellt werden.

Um ein Verdrehen oder Verkanten der Zahnstange 7 sicher zu verhindern und sie auch sicher in Eingriff mit dem Ritzel 15 zu halten, ist die Führung der Zahnstange 7 in der Verlängerung 9 ebenfalls vorteilhaft, wobei eine separate Führungsbahn vorteilhafterweise aus der Verlängerung 9 herausnehmbar ist, wodurch die Zahnstange 7 vom Ritzel 15 abgehoben und dann auch lösbare Verbindung von Zahnstange 7 und Kolbenstange 12 gelöst werden kann, so dass die Teile getrennt werden können. Im Betrieb wird eine allfällige separat eingesetzte Führungsbahn in der Verlängerung 9 durch vorzugsweise mehrere Wurmschrauben gehalten und fixiert. Sie kann mittels dieser Schrauben auch in einer durch die Längsachse der Schrauben vorgegebenen Richtung verstellt werden.

Ein weiterer Vorteil des Fluidantriebes ist - in jedem Anwendungsfall - die einfache Verbindung mit einem Drehsensor, der zur Steuerung und Überwachung der Bewegung der verschwenkbaren Teile S, K des Verdecksystems mit der Steuerelektronik der Betätigungsanordnung verbunden sein kann. Dieser Drehsensor kann beispielsweise direkt mit der Drehwelle W oder mit der Abtriebswelle jedes beliebigen Fluidmotors gekoppelt oder darauf aufgebaut sein bzw. wirkt mit diesen Teilen zusammen.

Auch andere mechanische Übersetzungen zwischen Zahnstange 7 und Drehwelle W sind möglich, so beispielsweise Schneckengetriebe oder Kegelradgetriebe, welche speziell dann von Vorteil sind, wenn die Drehwelle W nicht genau senkrecht auf die Längsachse des Fluidzylinders 6 stehen soll, sondern Winkel ungleich 90° oder Versetzungen zwischen Kolbenstange 7 und Drehwelle W erforderlich sind.

Auch andere Arten von Drehantrieben, die nicht in den Schutzbereich der Patentansprüche fallen, sind bekannt, so etwa beispielsweise ein Drehantrieb D in Form eines Drehkolbenzylinders, wobei in einem Gehäuse eine Welle drehbar gelagert ist, welche gleichzeitig auch die Drehwelle W des Drehantriebes D ist und vorzugsweise mit einer Verzahnung oder einer ähnlichen bzw. funktionell gleich wirkenden Verbindungsstruktur zu einem verschwenkbaren Bauteil versehen ist. An der Drehwelle W ist dann im Inneren des Drehkolbenzylinders ein Kolben in Form eines Flügels drehfest montiert, welcher Flügel das Innere des Gehäuses in zwei Arbeitsräume unterteilt, welche mit dem Druckmedium beaufschlagt werden, wodurch der Flügel bewegbar ist und derart die Drehwelle W um ihre Achse verdreht.

Neben den oben beschriebenen und in den Zeichnungen dargestellten Varianten sind weiters auch anderen Arten von Fluidmotoren bekannt, die nicht in den Schutzbereich der Patentansprüche fallen, wie zum Beispiel drehend arbeitende Zahnradmotoren, Flügelzellenmotoren oder Axial- bzw. Radialkolbenmotoren oder linear wirkenden Schubkolbenmotoren, auch ohne Kolbenstange, sondern auf einen Hebel einwirkend, der die Umsetzung in eine Drehbewegung einer mit diesem Hebel drehfest verbundenen Welle umsetzt. Die Abtriebswellen der Fluidmotoren können dann ebenfalls über Schnecken- oder Kegelradgetriebe und/oder über Unter- bzw. Übersetzungsgetriebe, vorzugsweise auf mechanischer Basis, mit einer Drehwelle W für einen schwenkbaren Teil S, K verbunden sein, sie können aber auch direkt diese Drehwelle W darstellen.

An der Drehwelle W kann selbstverständlich nicht nur ein Antrieb angreifen, sondern es können mehrere parallele Antriebe integriert in das Hauptlager H vorgesehen sein, um beispielsweise größere Momente erzeugen zu können. So können beispielsweise zwei lineare Antriebe im Hauptlager H über separate Getriebe auf die Drehwelle W einwirken oder auch am gleichen Getriebe zur Erhöhung des erzeugten Moments angreifen. Als weiteres Beispiel wäre es denkbar, dass an einem Ritzel einer Drehwelle W auf einander gegenüber liegenden Seiten Zahnstangen vorgesehen sind, vorzugsweise parallel zueinander, die jeweils von der Kolbenstange je eines linearen Arbeitszylinders, die ebenfalls vorzugsweise parallel zueinander liegen, bewegt werden.

## Patentansprüche

1. Betätigungsanordnung für schwenkbare Teile (S, K) von Verdecken, insbesonders Verdeckspriegel oder Verdeckdeckel, welche Teile (S, K) am Fahrzeug an zumindest einem Hauptlager (H) schwenkbar gelagert sind, mit zumindest einem an diesen schwenkbaren Teilen (S, K) angreifenden Drehantrieb (D) mit Fluidmotor und einer angetriebenen, baulich in das Hauptlager (H) integrierten Drehwelle (W), welches Hauptlager (H) eine Aufnahme und/oder Lagerstruktur (2) für die Drehwelle (W) des Drehantriebs (D) aufweist, **dadurch gekennzeichnet, dass** der Drehantrieb (D) einen linearen Arbeitszylinder (6) aufweist, dessen Kolbenstange (12) bei ihrem linearen Arbeitshub über ein mechanisches Getriebe (7, 15) die Drehwelle (W) antreibt.

2. Betätigungsanordnung nach Anspruch 1, **dadurch gekennzeichnet, dass** die Kolbenstange (12) zumindest an ihrem äußeren Ende in Form einer Zahnstange ausgebildet ist oder mit einer Zahnstange (7) in zug- und druckfester Verbindung steht, und dass ein Ritzel (15) in die Verzahnung der Zahnstange (7) eingreift, welches Ritzel (15) drehfest auf der Drehwelle (W) befestigt ist.

3. Betätigungsanordnung nach Anspruch 2, **dadurch gekennzeichnet, dass** das Ritzel (15) an einem Ende der Drehwelle (W) befestigt und das zweite Ende der Drehwelle (W) mit dem schwenkbaren Teil (S, K) drehfest verbunden ist.

4. Betätigungsanordnung nach Anspruch 2 oder 3, **dadurch gekennzeichnet, dass** die Zahnstange (7) in einer Führungsbahn in Längsrichtung geführt ist, wobei die Führungsbahn vorzugsweise in Richtung auf das Ritzel (15) hin verstellbar gelagert ist, vorzugsweise mittels Schrauben.

5. Betätigungsanordnung nach Anspruch 1, **dadurch gekennzeichnet, dass** der Arbeitszylinder (6) und die Drehwelle (W) über ein mechanisches Schneckengetriebe verbunden sind.

6. Betätigungsanordnung nach Anspruch 1, **dadurch gekennzeichnet, dass** der Arbeitszylinder (6) und die Drehwelle (W) über ein Kegelrad-Getriebe verbunden sind.

7. Betätigungsanordnung nach einem der Ansprüche 2 bis 4, **dadurch gekennzeichnet, dass** sich die Kolbenstange (12), der damit zusammenwirkende Abschnitt der Drehwelle (W) und alle zwischengeschalteten Teile unter einer Abdeckung (9) befinden.

8. Betätigungsanordnung nach Anspruch 7, **dadurch gekennzeichnet, dass** die Abdeckung (9) eine Verlängerung des Arbeitszylinders (6) ist.

9. Betätigungsanordnung nach Anspruch 7, **dadurch gekennzeichnet, dass** die Abdeckung (9) durch das Hauptlager (H) oder Teile des Hauptlagers gebildet ist.

10. Betätigungsanordnung nach einem der Ansprüche 1 bis 9, **dadurch gekennzeichnet, dass** die Drehwelle (W) des Drehantriebs (D) in der Schwenkachse (A) des schwenkbaren Teiles (S, K) liegt und somit gleichzeitig die Hauptachse des Hauptlagers (H) ist, wobei die Drehwelle (W) mit dem schwenkbaren Teil (S, K) drehfest verbunden ist, allenfalls über einen zwischengeschalteten Hebel.

11. Betätigungsanordnung nach einem der Ansprüche 1 bis 10, **dadurch gekennzeichnet, dass** der Drehantrieb (D) zumindest teilweise, vorzugsweise zur Gänze, im Inneren des Hauptlagers (H) liegt.

12. Betätigungsanordnung nach einem der Ansprüche 1 bis 11, **dadurch gekennzeichnet, dass** das Hauptlager (H) aus einem Strangpressprofil hergestellt ist.

13. Betätigungsanordnung nach einem der Ansprüche 1 bis 12, **dadurch gekennzeichnet, dass** die Drehwelle (W) den schwenkbaren Teil (S, K) zumindest zum Teil auch trägt, unmittelbar oder mittelbar über zumindest einen, mit dem schwenkbaren Teil (S, K) fest verbundenen Hebel.

14. Betätigungsanordnung nach einem der Ansprüche 1 bis 13, **dadurch gekennzeichnet, dass** ein Drehsensor vorgesehen und mit vorzugsweise der Drehwelle (W) oder aber der Drehachse des Drehantriebs (D) gekoppelt ist.

## Claims

1. An actuator arrangement for pivotable parts (S, K) of convertible tops, in particular convertible top bows or convertible top covers, which parts (S, K) are pivotably mounted on the vehicle at at least one main bearing (H), comprising at least one rotary drive (D) acting on these pivotable parts (S, K) comprising a fluid motor and a driven rotary shaft (W) structurally integrated in the main bearing (H), which main bearing (H) has a receiving and/or bearing structure (2) for the rotary shaft (W) of the rotary drive (D), **characterised in that** the rotary drive (D) comprises a linear working cylinder (6), the piston rod (12) whereof drives the rotary shaft (W) during its linear working stroke via a mechanical gear (7, 15).

2. The actuator arrangement according to claim 1, **characterised in that** the piston rod (12) is configured in the form of a rack at least at its outer end or is connected in a tensionally rigid and pressure-tight manner to a rack (7) and that a pinion (15) engages in the toothing of the rack (7), which pinion (15) is fastened rotationally fixedly to the rotary shaft (W).

3. The actuator arrangement according to claim 2, **characterised in that** the pinion (15) is fastened at one end of the rotary shaft (W) and the second end of the rotary shaft (W) is connected rotationally fixedly to the pivotable part (S, K).

4. The actuator arrangement according to claim 2 or 3, **characterised in that** the rack (7) is guided in a guide track in the longitudinal direction, wherein the guide track is preferably mounted adjustably in the direction of the pinion (15), preferably by means of screws.

5. The actuator arrangement according to claim 1, **characterised in that** the working cylinder (6) and the rotary shaft (W) are connected via a mechanical worm gear.

6. The actuator arrangement according to claim 1, **characterised in that** the working cylinder (6) and the rotary shaft (W) are connected via a bevel gear system.

7. The actuator arrangement according to any one of claims 2 to 4, **characterised in that** the piston rod (12), the section of the rotary shaft (W) cooperating therewith and all interposed parts are located under a cover (9).

8. The actuator arrangement according to claim 7, **characterised in that** the cover (9) is an extension of the working cylinder (6).

9. The actuator arrangement according to claim 7 **characterised in that** the cover (9) is formed by the main bearing (H) or parts of the main bearing.

10. The actuator arrangement according to any one of claims 1 to 9, **characterised in that** the rotary shaft (W) of the rotary drive (D) lies in the pivot axis (A) of the pivotable part (S, K) and thus is at the same time the principal axis of the main bearing (H), wherein the rotary shaft (W) is connected rotationally fixedly to the pivotable part (S, K), if need be via an interposed lever.

11. The actuator arrangement according to any one of claims 1 to 10, **characterised in that** the rotary drive (D) lies at least partially, preferably entirely inside the main bearing (H).

12. The actuator arrangement according to any one of claims 1 to 11, **characterised in that** the main bearing (H) is made from an extruded profile.

13. The actuator arrangement according to any one of claims 1 to 12, **characterised in that** the rotary shaft (W) at least partly bears the pivotable part (S, K), directly or indirectly via at least one lever firmly connected to the pivotable part (S, K).

14. The actuator arrangement according to any one of claims 1 to 13, **characterised in that** a rotation sensor is provided and is preferably coupled to the rotary shaft (W) or to the axis of rotation of the rotary drive (D).

## Revendications

1. Dispositif d'actionnement pour pièces pivotantes (S, K) de capotes, notamment ridelles de capotes ou couvercles de capotes, lesquelles pièces (S, K) s'appuient de manière pivotable sur le véhicule au moins sur un palier principal (H), comportant au moins une commande rotative (D) en prise sur ces pièces pivotantes (S, K) et équipée d'un moteur à fluide et un arbre rotatif (W) mené et intégré à la construction dans le palier principal (H), lequel palier principal (H) présente une structure de support et/ou d'appui (2) pour l'arbre rotatif (W) de la commande rotative (D), **caractérisé en ce que** la commande rotative (D) présente un vérin linéaire (6) dont la tige de piston (12), lors de sa course linéaire, entraîne l'arbre rotatif (W) par l'intermédiaire d'un engrenage mécanique (7, 15).

2. Dispositif d'actionnement selon la revendication 1, **caractérisé en ce que** la tige de piston (12) est réalisée du moins à son extrémité extérieure sous forme d'une crémaillère ou est en liaison fixe en traction et pression avec une crémaillère (7) et qu'un pignon (15) s'engrène dans la denture de la crémaillère (7), lequel pignon (15) est fixé de manière fixe en rotation sur l'arbre rotatif (W).

3. Dispositif d'actionnement selon la revendication 2, **caractérisé en ce que** le pignon (15) est fixé à une extrémité de l'arbre rotatif (W) et que la deuxième extrémité de l'arbre rotatif (W) est reliée de manière fixe en rotation à la pièce pivotante (S, K).

4. Dispositif d'actionnement selon la revendication 2 ou 3, **caractérisé en ce que** la crémaillère (7) est guidée dans une voie de guidage dans le sens longitudinal, la voie de guidage s'appuyant de préférence de manière mobile en direction du pignon (15), de préférence au moyen de vis.

5. Dispositif d'actionnement selon la revendication 1, **caractérisé en ce que** le vérin (6) et l'arbre rotatif (W) sont reliés par un engrenage à vis sans fin mécanique.

6. Dispositif d'actionnement selon la revendication 1, **caractérisé en ce que** le vérin (6) et l'arbre rotatif (W) sont reliés par un engrenage à roue conique.

7. Dispositif d'actionnement selon une des revendications 2 à 4, **caractérisé en ce que** la tige de piston (12), la section de l'arbre rotatif (W) coopérant avec et toutes les pièces interposées se trouvent sous un recouvrement (9).

8. Dispositif d'actionnement selon la revendication 7, **caractérisé en ce que** le recouvrement (9) est un prolongement du vérin (6).

9. Dispositif d'actionnement selon la revendication 7, **caractérisé en ce que** le recouvrement (9) est constitué par le palier principal (H) ou des parties du palier principal.

10. Dispositif d'actionnement selon une des revendications 1 à 9, **caractérisé en ce que** l'arbre rotatif (W) de la commande rotative (D) se trouve dans l'axe de pivotement (A) de la pièce pivotante (S, K) et est ainsi en même temps l'axe principal du palier principal (H), l'arbre rotatif étant relié de manière fixe en rotation à la pièce pivotante (S, K), en tout cas par un levier interposé.

11. Dispositif d'actionnement selon une des revendications 1 à 10, **caractérisé en ce que** la commande rotative (D) se trouve du moins partiellement, de préférence en totalité, à l'intérieur du palier principal (H).

12. Dispositif d'actionnement selon une des revendications 1 à 11, **caractérisé en ce que** le palier principal (H) est fabriqué à partir d'un profilé filé à la presse.

13. Dispositif d'actionnement selon une des revendications 1 à 12, **caractérisé en ce que** l'arbre rotatif (W) supporte aussi du moins en partie la pièce pivotante (S, K) directement ou indirectement par l'intermédiaire d'au moins un levier relié fixement à la pièce pivotante (S, K).

14. Dispositif d'actionnement selon une des revendications 1 à 13, **caractérisé en ce qu'**il est prévu un capteur de rotation qui est de préférence couplé à l'arbre rotatif (W) ou même à l'axe de rotation de la commande rotative (D).
